# EUROPÄISCHE PATENTSCHRIFT

(11) **EP 2 387 876 B1**
(45) Veröffentlichungstag und Bekanntmachung des Hinweises auf die Patenterteilung: **02.04.2014**
(21) Anmeldenummer: 11165789.6
(22) Anmeldetag: 12.05.2011
(51) Int. Cl.: A01G 5/04, A01G 9/02, A01G 9/12

(54) **Pflanz-Anordnung**
Plant assembly
Agencement de plante

(30) Priorität: 20.05.2010 DE 102010029172
(43) Veröffentlichungstag der Anmeldung: 23.11.2011
(73) Patentinhaber: Geobra Brandstätter GmbH & Co. KG, D-90513 Zirndorf (DE)
(72) Erfinder: Jaensch, Peter, 90491, Nürnberg (DE)
(74) Vertreter: Rau, Schneck & Hübner Patentanwälte Rechtsanwälte PartGmbB

(56) Entgegenhaltungen:
- DE-B3- 10 350 369
- FR-A1- 2 467 541
- GB-A- 2 055 535

## Beschreibung

Die Erfindung betrifft eine Pflanz-Anordnung für Pflanzen, insbesondere für Topf-Pflanzen mit rankenden Trieben.

Derartige Pflanz-Anordnungen sind durch offenkundige Vorbenutzung seit Längerem bekannt.

Aus der DE 103 50 369 B3 ist eine Pflanz-Anordnung mit einem Grundkörper und einem darin angeordneten Pflanztopf bekannt, an dem Stabhalterungen vorgesehen sind. In die Stabhalterungen sind Stützstäbe eingesetzt, die im Wesentlichen vertikal verlaufen. Die Stützstäbe können durch weitere, im Wesentlichen horizontal verlaufende Stützstäbe miteinander verbunden sein.

Die GB 2 055 535 A offenbart eine Pflanz-Anordnung, die einen Topf und eine Halte-Vorrichtung zum Halten einer Pflanze umfasst. Die Halte-Vorrichtung weist ein Fußteil und ein vertikal verlaufendes Basis-Rohr auf. Auf dem Basis-Rohr sind Halte-Elemente zum Halten von Pflanzen angeordnet. Jedes Halte-Element umfasst einen zentralen Hülsen-Körper, von dem Halte-Arme zum Halten einer Pflanze radial nach außen vorspringen. Die Halte-Elemente sind über ihre Hülsen-Körper verschiebbar an dem Basis-Rohr geführt und gegenüber diesem örtlich festlegbar.

Aus der FR 2 467 541 A1 ist eine Pflanz-Anordnung mit einem vertikal verlaufenden Halte-Element bekannt. In dem Halte-Element sind mehrere Löcher übereinander angeordnet, durch die horizontal verlaufende Halte-Arme schiebbar und so gegenüber dem Halte-Element in vertikaler Richtung örtlich festlegbar sind.

Es ist die Aufgabe der Erfindung, eine Pflanz-Anordnung derart weiter zu entwickeln, dass ihre Handhabung vereinfacht ist.

Die Aufgabe wird durch die Merkmale des Anspruchs 1 gelöst. Der Kern der Erfindung besteht darin, eine Pflanz-Anordnung mit einer Rank-Hilfe für eine Pflanze, insbesondere für eine Topf-Pflanze mit rankenden Trieben zu gestalten, wobei die Rank-Hilfe eine Feder-Einheit aufweist, die durch Betätigung von einer Befestigungs-Stellung in eine Verlagerungs-Stellung überführbar ist. In der nicht betätigten Befestigungs-Stellung der Feder-Einheit ist die Rank-Hilfe an einem Halte-Element befestigt. In der betätigten Verlagerungs-Stellung der Feder-Einheit ist die Rank-Hilfe entlang des Halte-Elements verlagerbar. Das Halte-Element verläuft im Wesentlichen vertikal und ist an einem Grundkörper befestigt. Der Grundkörper umgibt einen Innenraum und weist mindestens eine Pflanztopf-Aufnahme auf. In der Pflanztopf-Aufnahme ist ein Pflanztopf angeordnet, der einen Pflanztopf-Innenraum zur Aufnahme einer Pflanze umgibt und der eine Pflanztopf-Öffnung zum Einsetzen der Pflanze in den Pflanztopf-Innenraum aufweist. Die Rank-Hilfe verläuft im Wesentlichen horizontal, vorzugsweise senkrecht zu dem im Wesentlichen vertikalen Halte-Element. Die erfindungsgemäße Pflanz-Anordnung stellt damit eine Rank-Hilfe zur Verfügung, die einfach und mit wenigen Handgriffen an dem Grundkörper be-festigbar ist. Bei einer vorzugsweise elliptischen Ausbildung der Feder-Einheit mit zwei Feder-Elementen, die an ihren Enden fest und insbesondere einstückig miteinander verbunden sind, ist die Rank-Hilfe und die Pflanz-Anordnung insgesamt ästhetisch ansprechend ausgeführt und entspricht damit erhöhten Ansprüchen eines Anwenders. Vorzugsweise ist die Feder-Einheit durch manuelles Zusammendrücken der Feder-Elemente beispielsweise durch elastische Verformung betätigtbar. Insbesondere ist die Rank-Hilfe an dem Halte-Element stufenlos höhenverstellbar. Für eine verbesserte Befestigung der Rank-Hilfe an dem Halte-Element können die Feder-Elemente Durchsteck-Öffnungen aufweisen, an welchen Klemm-Backen mit einer Klemm-Fläche angeordnet sind. In der Befestigungs-Stellung liegen die Klemm-Flächen dann an dem Halte-Element an, so dass ein erhöhter Reibwiderstand der Rank-Hilfe gegenüber einer vertikalen Verschiebung an dem Halte-Element gegeben ist. In der Verlagerungs-Stellung sind die Klemm-Flächen beabstandet zu dem Halte-Element angeordnet, so dass eine besonders leichtgängige Verlagerung der Rank-Hilfe entlang des Halte-Elements ermöglicht ist.

Weitere vorteilhafte Ausgestaltungen der Erfindung ergeben sich aus den Unteransprüchen.

Zusätzliche Merkmale und Einzelheiten der Erfindung ergeben sich aus der nachfolgenden Beschreibung eines Ausführungsbeispiels anhand der Zeichnung.

Es zeigen:
- Fig. 1: eine perspektivische Darstellung einer erfindungsgemäßen Pflanz-Anordnung in einer Befestigungs-Stellung einer Rank-Hilfe,
- Fig. 2: einen Längsschnitt gemäß der Schnittlinie II-II in Fig. 1,
- Fig. 3: eine vergrößerte Seitenansicht einer an einem Halte-Element befestigten Rank-Hilfe,
- Fig. 4: eine Fig. 2 entsprechende vergrößerte Schnitt-Darstellung des Halte-Elements mit der Rank-Hilfe und

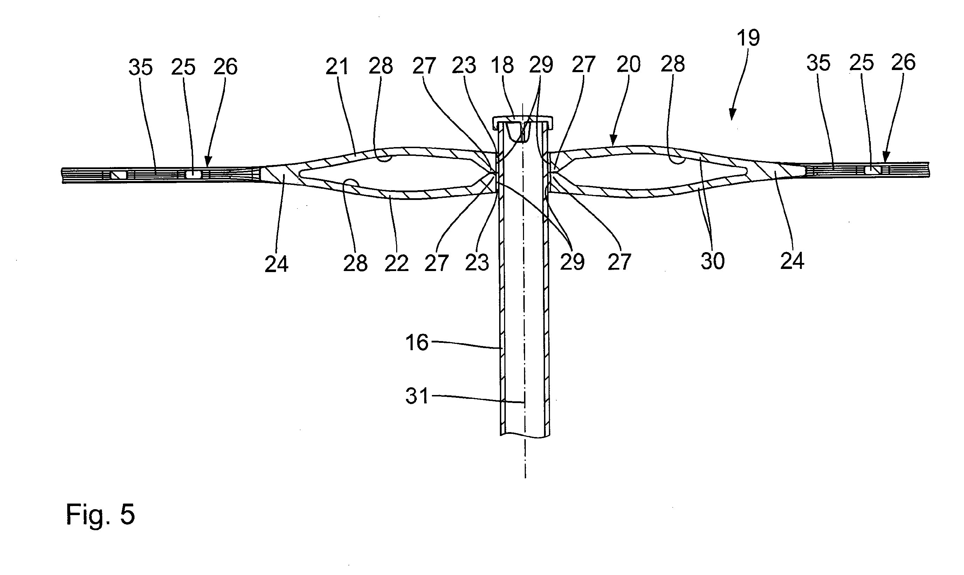

- Fig. 5: einen Fig. 4 entsprechenden Längsschnitt der Rank-Hilfe in einer Verlagerungs-Stellung.

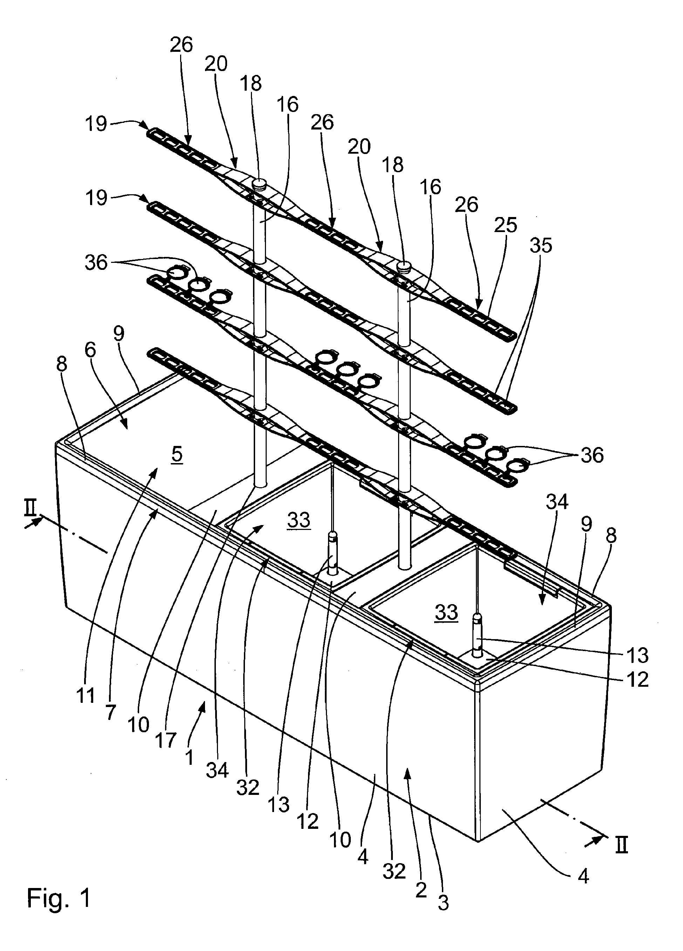

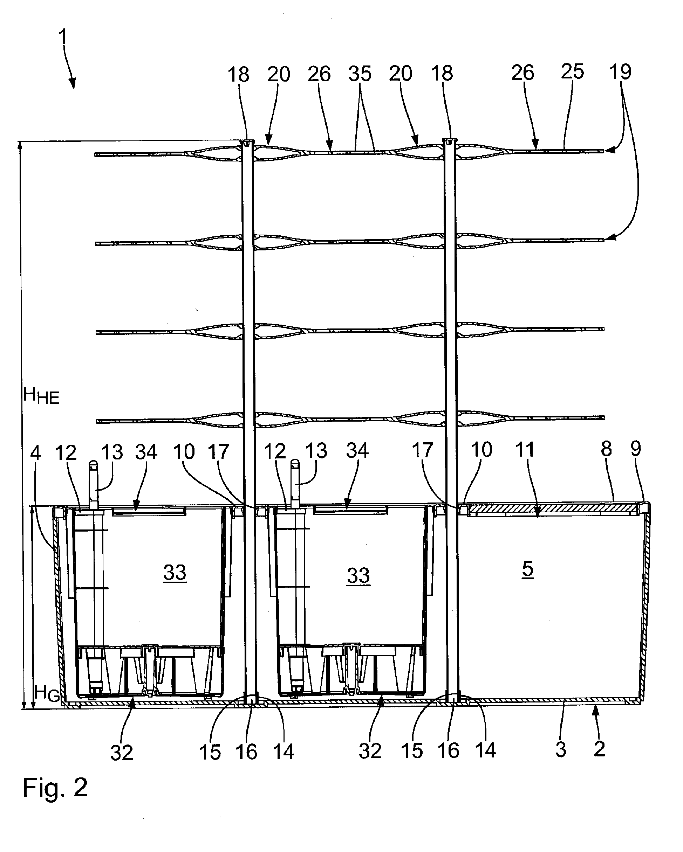

Eine in den Figuren 1 und 2 dargestellte Pflanz-Anordnung 1 umfasst einen im Wesentlichen quaderförmigen Grundkörper 2 mit einem rechteckigen Boden 3 und sich im Wesentlichen von dem Boden 3 vertikal nach oben erstreckenden Seitenwänden 4. In der gezeigten Ausführung der Pflanz-Anordnung 1 sind die Seitenwände 4 gegenüber dem Boden 3 derart konisch angeordnet, dass ein Abstand gegenüberliegender Seitenwände 4 am Boden 3 am geringsten ist. Der Grundkörper 2, d. h. der Boden 3 und die einstückig mit dem Boden 3 verbundenen Seitenwände 4, umgeben einen Innenraum 5, dessen Querschnittsfläche parallel zum Boden 3 mit zunehmendem Abstand zum Boden 3 größer wird. Die Seitenwände 4 sind ebenfalls einstückig miteinander verbunden. Der Boden 3 kann auch eine andere Grundform aufweisen, wie beispielsweise ein Quadrat, ein Dreieck, ein Fünfeck, ein Sechseck, weitere Mehreck-Formen oder einen Kreis, wobei die Seitenwände 4 entsprechend anzupassen sind.

Der Grundkörper 2 weist dem Boden 3 gegenüberliegend eine Grundkörper-Öffnung 6 auf, auf die ein Rahmen 7 aufgesetzt ist. Der Rahmen 7 ist vorzugsweise an den Seitenwänden 4 des Grundkörpers 2 durch Aufklipsen verrastet. Es ist auch möglich, den Rahmen 7 einstückig mit den Seitenwänden 4 herzustellen, den Rahmen 7 mit den Seitenwänden 4 zu verkleben oder in einer anderen, gängigen Weise mit den Seitenwänden 4 zu verbinden.

Der Rahmen 7 ist entsprechend rechteckig ausgeführt mit zwei gegenüberliegend angeordneten Längskanten 8 und zwei gegenüberliegend angeordneten Querkanten 9. Die Längskanten 8 und die Querkanten 9 sind derart miteinander verbunden, dass sie eine geschlossene Rechteckform bilden. Zusätzlich weist der Rahmen 7 zwei Trenn-Stege 10 auf, die die gegenüberliegend angeordneten Längskanten 8 miteinander verbinden. Die Trenn-Stege 10 sind parallel zu den Querkanten 9 ausgerichtet und derart entlang der Längskanten 8 angeordnet, dass die Grundkörper-Öffnung 6 in drei gleich große Pflanztopf-Aufnahmen 11 unterteilt wird. Die Pflanztopf-Aufnahmen 11 sind jeweils im Wesentlichen quadratisch ausgeführt.

Es ist auch möglich, den Rahmen 7 anders zu gestalten, so dass mehr oder weniger als drei Pflanztopf-Aufnahmen 11 vorgesehen sind. Ein Pflanztopf 32 kann in einer Pflanztopf-Aufnahme 11 angeordnet sein, wobei der Pflanztopf 32 einen Pflanztopf-Innenraum 33 zur Aufnahme einer nicht dargestellten Pflanze umgibt und wobei eine Pflanztopf-Öffnung 34 vorgesehen ist zum Einsetzen der Pflanze, insbesondere einer Topf-Pflanze mit rankenden Trieben, in den Pflanztopf-Innenraum 33. Der Pflanztopf-Innenraum 33 ist an einer Unterseite durch einen Boden von einem Wasser-Vorratsraum getrennt. In dem Wasser-Vorratsraum sind mehrere Abstands-Halter vorgesehen, so dass der Pflanztopf 32 von dem Boden 3 des Grundkörpers 2 beabstandet ist. Über mehrere Öffnungen der AbstandsHalter kann Wasser aus dem Wasser-Vorratsraum zur Bewässerung der Pflanze in dem Pflanztopf-Innenraum 33 gelangen. Die Bewässerung der Pflanze erfolgt also indirekt über den Wasser-Vorratsraum und nicht direkt in den Pflanztopf 32, wobei der Wasser-Vorratsraum über einen Einfüll-Schacht von einer Oberseite des Pflanztopfs 32 befüllt wird. Dadurch wird vermieden, dass die Pflanze mit zuviel Wasser versorgt, also übergossen wird. Der Einfüll-Schacht weist gemäß dem gezeigten Ausführungsbeispiel einen im Wesentlichen quadratischen Querschnitt auf, ist in einem Eckbereich des Pflanztopfs 32 angeordnet und von dem Pflanztopf-Innenraum 33 getrennt. Der Schacht kann auch andere Querschnittsformen aufweisen. An einer Oberseite ist der Schacht durch einen in etwa quadratischen Deckel 12 verschlossen. In dem Schacht ist weiterhin eine Füllstands-Anzeige 13 mit einem nicht dargestellten Schwimmer vorgesehen, wobei die Füllstands-Anzeige 13 durch eine Öffnung in dem Deckel 12 aus dem Schacht nach außen geführt ist.. Die Füllstands-Anzeige 13 dient zur Anzeige und Überwachung eines Füllstands mit Wasser in dem Wasser-Vorratsraum der Pflanz-Anordnung 1.

Ausgehend von dem Boden 3 erstrecken sich zwei in den Innenraum 5 des Grundkörpers 2 hineinragende Klemm-Vorrichtungen 14. Jede Klemm-Vorrichtung 14 ist im Wesentlichen zylindrisch ausgebildet mit einer Innenbohrung 15, die auch konisch ausgeführt sein kann, so dass ein Durchmesser der Innenbohrung 15 zum Boden 3 hin kleiner wird.

In die Innenbohrung 15 der Klemm-Vorrichtung 14 ist ein Halte-Element 16 eingesteckt, das einen Außendurchmesser derart aufweist, dass es in der Innenbohrung 15 der Klemm-Vorrichtung 14 geklemmt ist. Das Halte-Element 16 erstreckt sich ausgehend von der am Boden 3 angeordneten Klemm-Vorrichtung 14 im Wesentlichen vertikal von dem Boden 3 weg und ist durch eine Führungs-Bohrung 17 in dem Trenn-Steg 10 geführt.

Das Halte-Element 16 weist eine Höhe H_{HE} auf, die größer ist als eine Höhe H_{G} des Grundkörpers. In einem nicht montierten Zustand des Halte-Elements 16 an dem Grundkörper 2 ist die Führungs-Bohrung 17 in dem Trenn-Steg 10 mit einer Abdeck-Kappe 18 verschlossen, so dass die Pflanz-Anordnung 1 auch bei einer Verwendung ohne Halte-Elemente 16 den gesteigerten optischen Ansprüchen eines Anwenders genügt.

Insbesondere ist es dadurch auch möglich, eine flexible Anordnung der Halte-Elemente 16 an dem Grundkörper 2 zu ermöglichen, indem beispielsweise bei der im Ausführungsbeispiel gezeigten Pflanz-Anordnung 1 nur ein Halte-Element 16 oder kein Halte-Element 16 vorgesehen ist. Für den Fall, dass ein Halte-Element 16 vorgesehen ist, kann die Abdeck-Kappe 18 dadurch verwendet werden, dass ein der Klemm-Vorrichtung 14 gegenüberliegend angeordnetes Ende des Halte-Elements 16 durch die Abdeck-Kappe 18 verschlossen ist. Dadurch wird einerseits die ästhetische Gestaltung der Pflanz-Anordnung 1 verbessert und gleichzeitig eine Verunreinigung des Halte-Elements 16 vermieden.

Das Halte-Element 16 ist als Rohr ausgeführt und kann beispielsweise mehrere insbesondere durch Steckverbindungen miteinander verbindbare Rohr-Abschnitte und/oder ein Teleskop-Rohr umfassen. In dem gezeigten Ausführungsbeispiel ist das Halte-Element 16 als einstückiges Rohr ausgeführt. In der gezeigten Ausführungsform weist die Pflanz-Anordnung 1 also drei Pflanztopf-Aufnahmen 11 zum Einsetzen von drei Pflanztöpfen auf, wobei jeweils zwischen zwei benachbarten Pflanztopf-Aufnahmen 11 jeweils ein Halte-Element 16 vorgesehen ist.

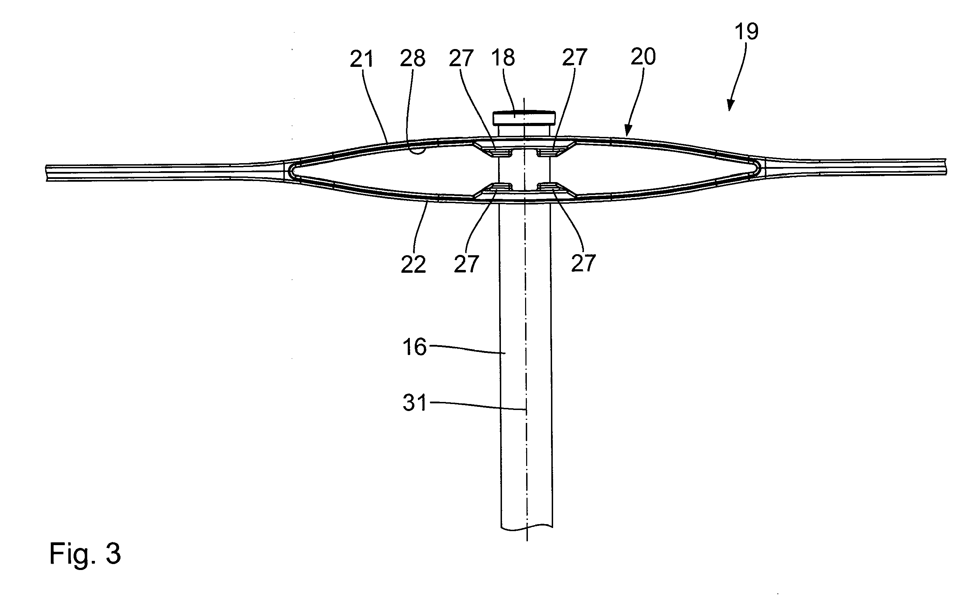

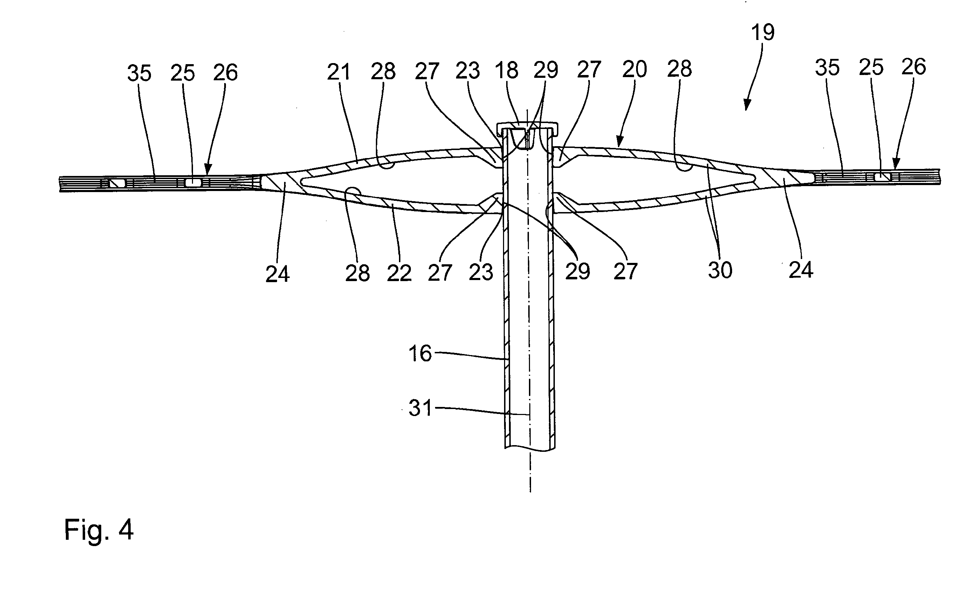

Wie in den Fig. 3 und 4 dargestellt, ist eine Rank-Hilfe 19 ist mit einer Feder-Einheit 20 an dem Halte-Element 16 befestigt. Dabei weist die Feder-Einheit 20 ein oberes Feder-Element 21 und ein unteres Feder-Element 22 auf. In den Feder-Elementen 21, 22 ist jeweils eine Durchsteck-Öffnung 23 vorgesehen, wobei die Durchsteck-Öffnungen 23 beabstandet und konzentrisch zu dem Halte-Element 16 angeordnet sind. Die Feder-Elemente 21, 22 sind im Wesentlichen flachstabförmig ausgebildet und weisen eine gebogene Form auf. Die Feder-Elemente 21, 22 sind weiterhin an ihren Enden jeweils miteinander fest und insbesondere einstückig verbunden. Dabei sind die Feder-Elemente 21, 22 ihrer gebogenen Form entsprechend derart spiegelsymmetrisch angeordnet, dass die Feder-Einheit 20 eine elliptische Form aufweist. Jeweils seitlich von Verbindungsstellen 24 des oberen Feder-Elements 21 mit dem unteren Feder-Element 22 erstrecken sich seitlich Rank-Ausleger 25. Die Rank-Ausleger 25 können mehrere Öffnungen 35 aufweisen. Die Pflanze kann beispielsweise direkt durch die Öffnungen 35 ranken oder an den Öffnungen 35 befestigten Befestigungsösen 36 gehalten sein. Die Rank-Hilfe 19 ist mit den Durchsteck-Öffnungen 23 der Feder-Einheit 20 auf das Halte-Element 16 aufgeschoben.

Die Rank-Hilfe 19 ist im Wesentlichen horizontal und damit senkrecht zum Halte-Element 16 ausgerichtet. Gemäß der gezeigten Darstellung in den Figuren 1 und 2 sind bei der Pflanz-Anordnung 1 vier Rank-Hilfen 19 vorgesehen, die in regelmäßigen Abständen entlang der Halte-Elemente 16 vertikal beabstandet angeordnet sind. Die Rank-Hilfen 19 können zwei identische Rank-Elemente 26 aufweisen, die jeweils zu der Rank-Hilfe 19 miteinander verbunden sind. Dazu können die Rank-Elemente 26 jeweils einen Rastvorsprung und eine dazu korrespondierende Rastausnehmung aufweisen, so dass die Rank-Elemente 26 dauerhaft und fest miteinander verrastet sind. Dadurch, dass die Rank-Elemente 26 identisch ausgebildet sind, ist die Einzelbauteilgröße der Rank-Elemente 26 verringert und damit die Werkzeug- und Herstellkosten insgesamt reduziert. Weiterhin ist die Massenproduktion eines derartigen Rank-Elements ermöglicht, da für die gezeigte Pflanz-Anordnung 1 acht identische Rank-Elemente Verwendung finden.

Gemäß den Figuren 1 und 2 sind die Feder-Einheiten 20 nicht betätigt. In dieser Anordnung befinden sich die Feder-Einheiten 20 in einer Befestigungs-Stellung. In der Befestigungs-Stellung der Feder-Einheit ist die Rank-Hilfe 19 an dem Halte-Element 16 geklemmt. Dies erfolgt dadurch, dass die Rank-Hilfe an den beiden Durchsteck-Öffnungen 23 jeweils ein Paar von Klemm-Backen 27 aufweist. Die Klemm-Backen 27 weisen jeweils die Form einer halben Kreisring-Scheibe auf und sind konzentrisch zu der Durchsteck-Öffnung 23 an dem oberen Feder-Element 21 und an dem unteren Feder-Element 22 angeordnet. Die Klemm-Backen 27 sind dabei an einander zugewandten Innenseiten 28 der Feder-Elemente 21, 22 der Feder-Einheit angeordnet. Das bedeutet, dass die Klemm-Backen 27 innerhalb der von den Feder-Elementen 21, 22 gebildeten Ellipsenform angeordnet sind. Die Klemm-Backen 27 weisen eine dem Halte-Element 16 zugewandte Klemmfläche 29 auf, mit der sie in der Befestigungs-Stellung klemmend an dem Halte-Element 16 anliegen.

In der Befestigungs-Stellung sind die Klemmflächen gegenüber einer Längs-Achse 31 des Halte-Elements 16 X-förmig angeordnet, d. h. jeweils ein Paar von Klemm-Backen 27 an einem der Feder-Elemente 21, 22 ist derart angeordnet, dass sich ein Abstand der Klemm-Flächen 29 zum Inneren der Feder-Einheit 20 verringert. Die Klemm-Backen 27 sind einstückig jeweils an den Feder-Elementen 21, 22 angeformt.

Eine Betätigung der Feder-Einheit 20 erfolgt durch Zusammendrücken der Feder-Elemente 21, 22 derart, dass die Feder-Einheit 20 elastisch derart verformt wird, dass ein in dem unbetätigten Zustand gewölbter Bereich 30 der Feder-Elemente 21, 22 auf den korrespondierenden gewölbten Bereich 30 des jeweiligen gegenüberliegenden Feder-Elements 21, 22 gedrückt wird, bis der Bereich 30 im Wesentlichen senkrecht zu einer Längsachse 31 des Halte-Elements 16 angeordnet ist.

In der unbetätigten Stellung der Feder-Elemente 21, 22 ist eine von den Klemm-Flächen 29 umgebene Querschnittsfläche kleiner ist als eine Querschnittsfläche des Halte-Elements 16 senkrecht zur Längsachse 31. Dadurch liegen die Klemm-Backen 27 an dem Halte-Element 16 klemmend an. Durch Betätigung der Feder-Einheit 20, d. h. durch Zusammendrücken der Feder-Elemente 21, 22, so dass die Klemm-Backen 27 aufeinander zu bewegt werden, werden die Feder-Elemente 21, 22 derart elastisch verformt, dass die Bereiche 30 parallel zueinander und vertikal angeordnet sind. Damit wird auch die Anordnung der Klemm-Backen 27 um die Durchsteck-Öffnungen 23 herum entsprechend verändert. In dieser Anordnung, die auch als Verlagerungs-Stellung der Feder-Einheit 20 bezeichnet ist, haben die Klemm-Flächen 29 der Klemm-Backen 27 einen maximalen Abstand zueinander und begrenzen eine Querschnittsfläche, die größer ist als eine Querschnittsfläche des Halte-Elements 16 senkrecht zur Längsachse 31. Der maximale Abstand zwischen zwei gegenüberliegend angeordneten Klemm-Flächen 29 ist begrenzt durch ein Anliegen eines KlemmBackens 27 des oberen Feder-Elements 21 an einem Backen 27 des unteren Feder-Elements 22.

In der Verlagerungs-Stellung ist es dementsprechend möglich, die Rank-Hilfe 19 längs des Halte-Elements 16 zu verlagern. Die Rank-Hilfe 19 ist an dem Halte-Element 16 entsprechend stufenlos höhenverstellbar. Um einem Anwender eine Positionierhilfe bei der Anordnung einer Rank-Hilfe 19 zu ermöglichen, können an dem Halte-Element 16 entsprechend in regelmäßigen Abständen optische Positionsmarken vorgesehen sein. Es ist auch möglich, dass das Halte-Element 16 entsprechend Vorsprünge oder Kerben aufweist, an welchen die Rank-Hilfe 19 beim Verlagern in der Verlagerungs-Stellung einrasten kann. Dadurch wird es einem Anwender ermöglicht, auch bei einer Betätigung der erfindungsgemäßen Pflanz-Anordnung 1 eine regelmäßig beabstandete Anordnung der Rank-Hilfen 19 an den Halte-Elementen 16 zu ermöglichen. Dadurch, dass die erfindungsgemäße Pflanz-Anordnung 1 eine Rank-Hilfe 19 mit genau zwei Feder-Einheiten 20 aufweist, kann ein Anwender mit jeweils einer Hand eine Feder-Einheit 20 betätigen und somit selbständig und besonders einfach die Pflanz-Anordnung 1 montieren und bedienen.

Die Pflanz-Anordnung 1, d. h. der Grundkörper 2, die Halte-Elemente 16, die Rank-Hilfen 19 und die Pflanztöpfe 32 sind aus Kunststoff und vorzugsweise durch Spritzgießen hergestellt.

## Patentansprüche

1. Pflanz-Anordnung für Pflanzen, insbesondere für Topf-Pflanzen mit rankenden Trieben, wobei die Pflanz-Anordnung (1) umfasst
a. einen einen Innenraum (5) umgebenden Grundkörper (2) mit mindestens einer Pflanztopf-Aufnahme (11),
b. einen in der mindestens einen Pflanztopf-Aufnahme (11) angeordneten Pflanztopf (32) mit
i. einem von dem Pflanztopf (32) umgebenen Pflanztopf-Innenraum (33) zur Aufnahme einer Pflanze und
ii. einer Pflanztopf-Öffnung (34) zum Einsetzen der Pflanze in den Pflanztopf-Innenraum (33),
c. mindestens ein im Wesentlichen vertikal verlaufendes Halte-Element (16), und
d. mindestens eine im Wesentlichen horizontal verlaufende Rank-Hilfe (19) für die Pflanze,
**dadurch gekennzeichnet, dass**
e. die mindestens eine Rank-Hilfe (19) eine Feder-Einheit (20) aufweist, die durch Betätigung von einer Befestigungs-Stellung in eine Verlagerungs-Stellung überführbar ist,
f. die mindestens eine Rank-Hilfe (19) in der nicht betätigten Befestigungs-Stellung der Feder-Einheit (20) an dem Halte-Element (16) geklemmt ist,
g. die mindestens eine Rank-Hilfe (19) in der betätigten Verlagerungs-Stellung der Feder-Einheit (20) entlang des Halte-Elements (16) verlagerbar ist, und
h. das mindestens eine Halte-Element (16) an dem Grundkörper (2) befestigt ist.

2. Pflanz-Anordnung gemäß Anspruch 1, **dadurch gekennzeichnet, dass** die Feder-Einheit (20) zwei jeweils eine Durchsteck-Öffnung (23) aufweisende Feder-Elemente (21, 22) umfasst, wobei die DurchsteckÖffnungen (23) beabstandet zueinander angeordnet sind.

3. Pflanz-Anordnung gemäß Anspruch 2, **dadurch gekennzeichnet, dass** die Feder-Elemente (21, 22) an ihren Enden fest, insbesondere einstückig, miteinander verbunden sind.

4. Pflanz-Anordnung gemäß Anspruch 2 oder 3, **dadurch gekennzeichnet, dass** die Feder-Einheit (20) elliptisch ausgebildet ist.

5. Pflanz-Anordnung gemäß einem der Ansprüche 2 bis 4, **dadurch gekennzeichnet, dass** die Feder-Einheit (20) durch Zusammendrücken, insbesondere durch elastische Verformung, der Feder-Elemente (21, 22) betätigbar ist.

6. Pflanz-Anordnung gemäß einem der vorstehenden Ansprüche, **dadurch gekennzeichnet, dass** die Rank-Hilfe (19) mindestens einen eine Klemm-Fläche (29) aufweisenden Klemm-Backen (27) zur Klemmung an dem Halte-Element (16) aufweist.

7. Pflanz-Anordnung gemäß Anspruch 6, **dadurch gekennzeichnet, dass** die Klemm-Fläche (29) in der Befestigungs-Stellung der Feder-Einheit (20) an dem Halte-Element (16) anliegt und in der Verlagerungs-Stellung beabstandet zu dem Halte-Element (16) angeordnet ist.

8. Pflanz-Anordnung gemäß einem der vorstehenden Ansprüche, **dadurch gekennzeichnet, dass** die Rank-Hilfe (19) an dem Halte-Element (16) stufenlos höhenverstellbar ist.

9. Pflanz-Anordnung gemäß einem der vorstehenden Ansprüche, **dadurch gekennzeichnet, dass** das Halte-Element (16) am Grundkörper (2) in einer Klemm-Vorrichtung (14) befestigt ist.

10. Pflanz-Anordnung gemäß einem der vorstehenden Ansprüche, **dadurch gekennzeichnet, dass** der Grundkörper (2) mindestens einen Trenn-Steg (10) zur Trennung von zwei benachbarten Pflanztopf-Aufnahmen (11).

11. Pflanz-Anordnung gemäß Anspruch 10, **gekennzeichnet durch** eine Führungs-Bohrung (17) in dem Trenn-Steg (10) zur Führung des Halte-Elements (16).

12. Pflanz-Anordnung gemäß einem der vorstehenden Ansprüche, **gekennzeichnet durch** ein Rohr (16) als Halte-Element, insbesondere mehrere **durch** Steckverbindung verbindbare Rohr-Abschnitte oder ein Teleskop-Rohr.

13. Pflanz-Anordnung gemäß einem der vorstehenden Ansprüche, **gekennzeichnet durch** eine mehrere, insbesondere **durch** eine Rastverbindung miteinander verbindbare, Rank-Elemente (26) umfassende Rank-Hilfe (19).

14. Pflanz-Anordnung gemäß einem der vorstehenden Ansprüche, **gekennzeichnet durch** drei Pflanztöpfe (32) und jeweils zwischen zwei benachbarten Pflanztöpfen angeordnete Halte-Elemente (16).

## Claims

1. Plant arrangement for plants, in particular for pot plants with tendrillar shoots, wherein the plant arrangement (1) comprises
a. a base body (2) surrounding an interior (5) with at least one plant pot receptacle (11),
b. a plant pot (32) arranged in the at least one plant pot receptacle (11) with
i. a plant pot interior (33) surrounded by the plant pot (32) for receiving a plant and
ii. a plant pot opening (34) for inserting the plant in the plant pot interior (33),
c. at least one substantially vertically extending holding element (16), which is fastened to the base body (2), and
d. at least one substantially horizontally extending climbing aid (19) for the plant,
**characterized in that**
e. the at least one climbing aid (19) has a spring unit (20), which can be transferred by actuation from a fastening position into a displacement position,
f. the at least one climbing aid (19) is clamped on the holding element (16) in the non-actuated fastening position of the spring unit (20),
g. the at least one climbing aid (19) is displaceable along the holding element (16) in the actuated displacement position of the spring unit (20),
h. the at least one holding element (16) is fastened to the base body (2).

2. Plant arrangement according to claim 1, **characterised in that** the spring unit (20) comprises two spring elements (21, 22) each having an insertion opening (23), the insertion openings (23) being arranged spaced apart from one another.

3. Plant arrangement according to claim 2, **characterised in that** the spring elements (21, 22) are connected to one another rigidly, in particular in one piece, at their ends.

4. Plant arrangement according to claim 2 or 3, **characterised in that** the spring unit (20) is elliptical.

5. Plant arrangement according to any one of claims 2 to 4, **characterised in that** the spring unit (20) is actuatable by pressing together, in particular by resilient deformation, of the spring elements (21, 22).

6. Plant arrangement according to any one of the preceding claims, **characterised in that** the climbing aid (19) has at least one clamping jaw (27), which has a clamping face (29), for clamping onto the holding element (16).

7. Plant arrangement according to claim 6, **characterised in that** the clamping face (29) rests on the holding element (16) in the fastening position of the spring unit (20) and is arranged spaced apart from the holding element (16) in the displacement position.

8. Plant arrangement according to any one of the preceding claims, **characterised in that** the climbing aid (19) is steplessly heightadjustable on the holding element (16).

9. Plant arrangement according to any one of the preceding claims, **characterised in that** the holding element (16) is fastened to the base body (2) in a clamping device (14).

10. Plant arrangement according to any one of the preceding claims, **characterised in that** the base body (2) has at least one separating web (10) for separating two adjacent plant pot receptacles (11).

11. Plant arrangement according to claim 10, **characterised by** a guide hole (17) in the separating web (10) for guiding the holding element (16).

12. Plant arrangement according to any one of the preceding claims, **characterised by** a tube (16) as a holding element, in particular a plurality of tube portions, which are connectable by a plug connection, or a telescopic tube.

13. Plant arrangement according to any one of the preceding claims, **characterised by** a climbing aid (19), which comprises a plurality of climbing elements (26), which are connectable to one another, in particular by a latching connection.

14. Plant arrangement according to any one of the preceding claims, **characterised by** three plant pots (32) and holding elements (16) respectively arranged between two adjacent plant pots.

## Revendications

1. Agencement de plantes destiné à des plantes, en particulier, des plantes en pots comprenant des pousses grimpantes, l'agencement de plantes (1) comprenant
a. un corps de base (2) entourant un espace interne (5) comprenant au moins un réceptacle (11) pour pot de fleur,
b. un pot de fleur (32) disposé dans au moins un réceptacle (11) pour pot de fleur comprenant
i. un espace (33) interne de pot de fleur entouré par le pot de fleur (32) pour la réception d'une plante et
ii. un orifice (34) de pot de fleur pour l'insertion de la plante dans l'espace (33) interne de pot de fleur,
c. au moins un élément support (16) s'étendant dans l'ensemble verticalement, et
d. au moins un support pour plantes grimpantes (19), s'étendant dans l'ensemble horizontalement, pour la plante,
**caractérisé en ce que**
e. le au moins un support pour plantes grimpantes (19) présente un système élastique (20) qui peut passer d'une position de fixation vers une position de décalage,
f. le au moins un support pour plantes grimpantes (19) est en prise dans la position de fixation non actionnée du système élastique (20) sur l'élément support (16),
g. le au moins un support pour plantes grimpantes (19) dans la position de décalage du système élastique (20) peut être déplacé le long de l'élément support (16), et
h. au moins un élément support (16) est fixé sur le corps de base (2).

2. Agencement de plantes selon la revendication 1 **caractérisé en ce que** le système élastique (20) comprend deux éléments élastiques (21, 22) présentant chacun un orifice traversant (23), les orifices traversants (23) étant disposés espacés les uns des autres.

3. Agencement de plantes selon la revendication 2 **caractérisé en ce que** les éléments élastiques (21, 22) sont reliés ensemble à leurs extrémités, ne constituant en particulier qu'une seule pièce.

4. Agencement de plantes selon les revendications 2 ou 3 **caractérisé en ce que** le système élastique (20) est conçu sous forme elliptique.

5. Agencement de plantes selon l'une des revendications 2 à 4 **caractérisé en ce que** le système élastique (20) peut être mis en oeuvre par une pression, en particulier, par une déformation élastique des éléments élastiques (21, 22).

6. Agencement de plantes selon l'une des revendications précédentes **caractérisé en ce que** le support pour plantes grimpantes (19) présente au moins un épaulement pour le pincement (27), comportant au moins une surface de pincement (29), pour le pincement sur l'élément support (16).

7. Agencement de plantes selon la revendication 6 **caractérisé en ce que** la surface de pincement (29) est adjacente à l'élément support (16) dans la position de fixation du système élastique (20), et est disposée espacée de l'élément support (16) dans la position de décalage.

8. Agencement de plantes selon l'une des revendications précédentes, **caractérisé en ce que** le support pour plantes grimpantes (19) peut être réglé en hauteur de manière continue sur l'élément support (16).

9. Agencement de plantes selon l'une des revendications précédentes **caractérisé en ce que** l'élément support (16) est fixé sur le corps de base (2) dans un dispositif par pincement (14).

10. Agencement de plantes selon l'une des revendications précédentes, **caractérisé en ce que** le corps de base (2) présente au moins une barre de séparation (10) pour la séparation de deux réceptacles (11) de pots de fleur voisins.

11. Agencement de plantes selon la revendication 10 **caractérisé par** un alésage de guidage (17) dans la barre de séparation (10) pour le guidage de l'élément support (16).

12. Agencement de plantes selon l'une des revendications précédentes **caractérisé par** un tube (16) servant d'élément support, en particulier, plusieurs portions de tube pouvant être reliées par un système par emboîtements ou un tube télescopique.

13. Agencement de plantes selon l'une des revendications précédentes **caractérisé par** un système de support pour plantes grimpantes (19) comprenant plusieurs éléments de support pour plantes grimpantes (26), pouvant être en particulier reliés ensemble par une système par encliquetage.

14. Agencement de plantes selon l'une des revendications précédentes **caractérisé par** trois pots de fleur (32) et des éléments supports (16) disposés chaque fois entre deux pots de fleurs voisins.
